# FASCICULE DE BREVET EUROPEEN

(11) **EP 1 034 499 B1**
(45) Date de publication et mention de la délivrance du brevet: **16.04.2003**
(21) Numéro de dépôt: 98956940.5
(22) Date de dépôt: 24.11.1998
(51) Int. Cl.: G06F 17/60

(54) **SYSTEME AUTOMATISE D'EDITION ET DE GESTION DE CONTRAVENTIONS**
AUTOMATISCHES SYSTEM ZUR ERSTELLUNG UND VERWALTUNG VON STRAFZETTELN
AUTOMATED SYSTEM FOR ISSUING AND MANAGING OFFENCE TICKETS

(30) Priorité: 26.11.1997 FR 9714824
(43) Date de publication de la demande: 13.09.2000
(73) Titulaire: Grison, Paul, 06560 Valbonne (FR)
(72) Inventeur: Grison, Paul, 06560 Valbonne (FR)
(74) Mandataire: Bonneau, Gérard
(86) Numéro de dépôt international: FR9802509
(87) Numéro de publication internationale: WO99027474

(56) Documents cités:
- EP-A- 0 650 125
- EP-A- 0 671 701
- FR-A- 2 665 779
- GB-A- 2 219 272
- US-A- 2 023 102
- US-A- 3 837 101

## Description

### Domaine technique

La présente invention concerne l'établissement et le paiement des contraventions dressées par les agents de police préposés au stationnement aux véhicules en stationnement illicite sur la voie publique ou en infraction, et en particulier un système automatisé d'édition et de gestion de ces contraventions.

### Etat de la technique

Actuellement, en France la verbalisation par un policier ou contractuel des véhicules stationnant sur la voie publique se fait en remplissant manuellement un bordereau en papier à l'aide d'informations relatives à la date, l'heure, le lieu du stationnement ainsi que les informations relatives au véhicule telles que le numéro d'immatriculation, la marque, etc... Une fois rempli, le bordereau est glissé sous l'essuie-glace du véhicule. Muni de ce document, le possesseur du véhicule en infraction peut s'acquitter de la contravention en achetant un timbre amende dans un bureau de tabacs, timbre amende qui est collé sur le bordereau avant que celui-ci soit transmis au trésor public.

Ce système présente en fait plusieurs inconvénients. En particulier, le policier qui dresse la contravention a un travail fastidieux et long puisqu'il doit inscrire à la main toutes les informations du bordereau en double sur la souche de son carnet de contraventions, ce qui lui prend un temps considérable au détriment d'une réelle efficacité. De plus, le traitement administratif des bordereaux de contravention est très lourd à gérer.

Un autre inconvénient majeur provient du fait que le bordereau de contravention est glissé sous l'essuie-glace du véhicule. S'il pleut après que le bordereau a été placé sur le pare-brise du véhicule, le bordereau est alors mouillé, parfois détrempé, désagréable à manipuler, et souvent altéré ce qui le rendra inexploitable pour le paiement ultérieur. En outre, les bordereaux de contravention étant simplement glissés sous l'essuie glace sont quelquefois subtilisés par jeu ou retirés du véhicule en infraction par des automobilistes indélicats qui les placent sous les essuie-glace de leur propre véhicule pour éviter qu'un policier ne leur dresse une contravention, croyant que le véhicule en infraction a déjà été verbalisé. Ainsi, dans ce cas, l'automobiliste en infraction n'en n'ayant pas eu connaissance, ne s'acquitte donc pas de la contravention et aura à payer un montant plus élevé lorsqu'elle lui sera réclamée ultérieurement aggravant de ce fait un volume de contestations important.

Un système de traitement des contraventions décrit dans la demande de brevet FR-A-2.665.779 permet de remédier partiellement aux inconvénients cités ci-dessus. Ce système est constitué d'un terminal autonome portable pourvu d'un clavier alphanumérique, d'un écran et d'une imprimante adaptée à l'impression d'un code-barre sur un procès-verbal de contravention entré par le policier au moyen du clavier. Un micro-ordinateur localisé au commissariat central est muni d'un câble de raccordement des terminaux portables dans le but de collecter les informations recueillies par ces derniers et à les traiter. Un terminal de paiement situé également au commissariat central comportant un lecteur de procès-verbaux permet ensuite au possesseur du véhicule en infraction de s'acquitter du montant de la contravention.

Malheureusement, dans la mesure où le système décrit dans le document FR-A-2.665.779 utilise toujours des bordereaux en papier ou autre matière altérable pour y inscrire les .procès-verbaux, il existe toujours l'inconvénient que le bordereau soit rendu inexploitable en cas de pluie, surtout que l'altération d'une ou de quelques barres du code-barre suffit dans ce cas. De la même façon, un tel bordereau peut toujours être facilement retiré du véhicule en infraction pour être placé sur un autre véhicule. Un autre inconvénient inhérent à un tel système est dû à la présence d'une imprimante qui est, soit encombrante et lourde, soit est miniaturisées et donc peu fiable et dans tous les cas est sujette à tomber en panne du fait qu'elle fonctionne dans un environnement soumis aux intempéries. Enfin, les codes-barre sont facilement falsifiables par un contrevenant qui veut s'en donner la peine par retrait ou ajout de barres, générant ainsi des possibilités de manipulation inconcevables dans ce domaine sensible d'application, dont l'exploitation doit reposer sur une fiabilité et une sécurité totale.

### Exposé de l'invention

C'est pourquoi un but de l'invention est de fournir un système d'édition et de gestion des contraventions utilisant un support électronique inaltérable et infalsifiable du type carte à puce pour y enregistrer les informations du procès-verbal de contravention.

Un autre but de l'invention est de fournir un système d'édition et de gestion de contraventions utilisant un support clipsable sur l'essuie-glace du véhicule en infraction de manière à dissuader toute personne autre que le possesseur du véhicule de retirer ledit support.

L'objet de l'invention est donc un système d'édition et de gestion de contraventions comprenant un dispositif de saisie portable à la disposition de l'agent de police chargé de dresser une contravention à un véhicule en infraction pour y enregistrer les informations relatives au véhicule, un support de contravention destiné à être remis au possesseur du véhicule et adapté pour être inséré dans le dispositif de saisie de façon à y enregistrer les informations relatives au véhicule saisies à partir du dispositif de saisie portable sous la commande de l'agent de police, et un dispositif de consultation disposant d'un écran d'affichage et d'un moyen d'introduction du support de contravention de façon à permettre au possesseur du véhicule de prendre connaissance des informations relatives à l'infraction affichées sur l'écran d'affichage. Le support de contravention est constitué d'une carte à puce inaltérable et infalsifiable dans laquelle sont enregistrées les informations entrées par l'agent de police et de moyens de clipsage permettant à l'agent de police de clipser la carte sur le bras d'essuie glace, de sorte que la carte ne soit pas détériorée par la pluie et ne puisse pas être aisément retirée après avoir été clipsée.

### Description brève des figures

Les buts, objets et caractéristiques de l'invention ressortiront plus clairement à la lecture de la description qui suit faite en référence aux dessins dans lesquels :
la figure 1 est un bloc-diagramme représentant schématiquement tous les éléments du système d'édition et de gestion des contraventions selon l'invention,
la figure 2 est un organigramme représentant les opérations à effectuer dans le système selon l'invention illustré sur la figure 1,
les figures 3A et 3B représentent un premier mode de réalisation de la carte de contravention électronique utilisée dans le système selon l'invention,
les figures 4A et 4B représentent un deuxième mode de réalisation de la carte de contravention électronique utilisée dans le système selon l'invention et,
les figures 5A et 5B représentent un troisième mode de réalisation de la carte de contravention électronique utilisée dans le système selon l'invention.

### Description détaillée de l'invention

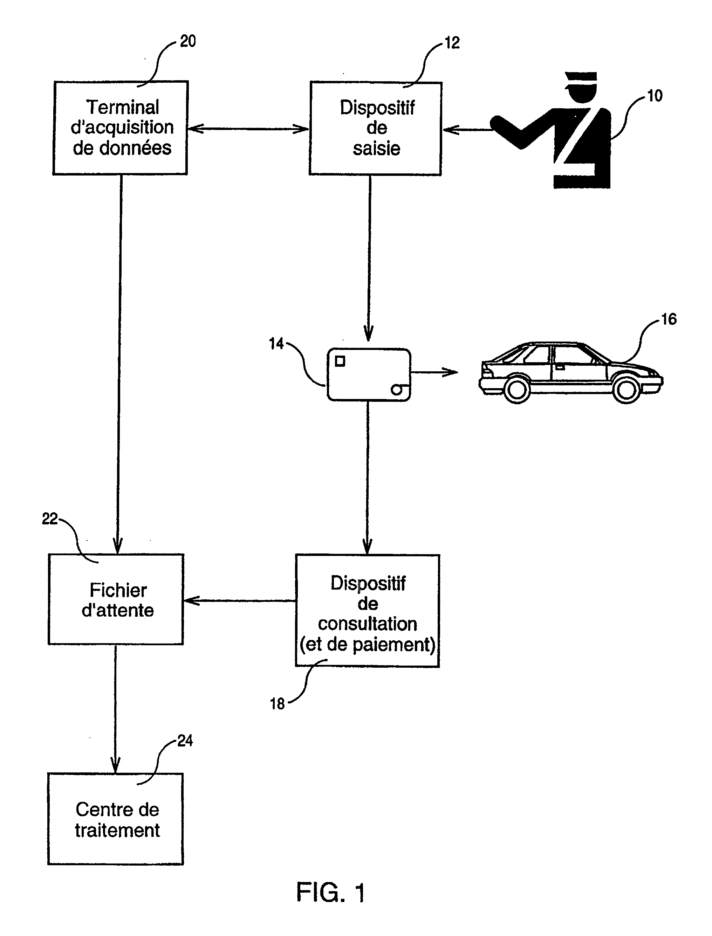

Comme illustré schématiquement sur la figure 1, l'agent de police (ou le contractuel) 10 chargé du stationnement a à sa disposition un dispositif de saisie 12 qui lui permet de délivrer à tout véhicule en infraction 16 une carte de contravention 14 qui est une carte électronique clipsable du type carte à puce, cette carte de contravention inaltérable et infalsifiable constituant l'élément essentiel du système d'édition et de gestion selon l'invention. Le dispositif de saisie 12 se présente sous forme d'un boîtier de dimensions réduites par exemple 20cm de longueur, 10cm de largeur et 3cm d'épaisseur. Il est équipé d'un clavier alphanumérique étanche, d'un écran de deux lignes de 16 caractères chacune, d'une carte de support des composants électronique, d'une batterie rechargeable, d'un horodateur et d'un lecteur/enregistreur de cartes à puce du type de la carte 14. Il permet le calcul d'algorithmes complexes de sécurisation en complémentarité avec ceux de la carte 14 et d'écrire les certificats correspondant.

Le support de contravention 14 est une carte à puce rendue inaltérable et infalsifiable par l'utilisation d'algorithmes complexes et le stockage d'informations dans des zones inviolables, en plastique, dans laquelle il est possible d'enregistrer ou de lire des données. De préférence, c'est une carte à puce jetable, non réutilisable, totalement protégée et non duplicable, seule capable d'assurer la sécurité totale du traitement des données.

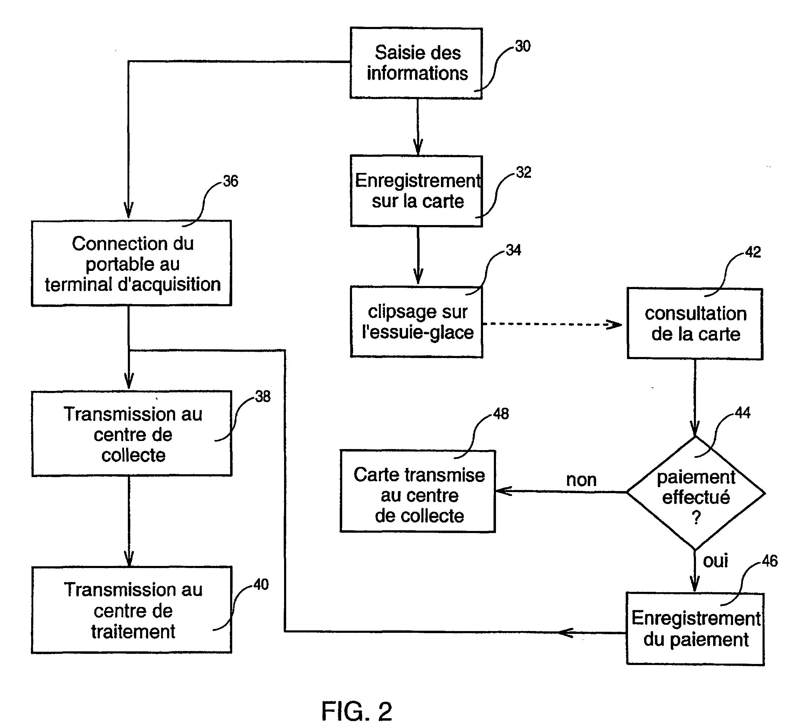

Le fonctionnement du système selon l'invention illustré sur la figure 1 se présente selon l'organigramme représenté sur la figure 2. Tout d'abord il y a saisie des informations (30) par le policier ou contractuel qui entre celles-ci dans le dispositif portable 12 à l'aide du clavier, c'est à dire le type de véhicule, la marque, le numéro d'immatriculation, la date, l'heure, le lieu, le type et la nature de l'infraction, le montant de l'infraction, le numéro d'identification du policier et le numéro de la contravention.

Ces informations sont alors enregistrées (32) sur la carte 14 que le policier a inséré dans le lecteur du dispositif 12. Une fois cet enregistrement effectué il la retire du boîtier portable 12 et la clipse sur l'essuie-glace du véhicule en infraction (34) grâce à un moyen de clipsage comme décrit ci-dessous.

A la fin de son service, le policier ou le contractuel rentre au commissariat où il connecte (36) son dispositif de saisie portable 12 à un terminal d'acquisition de données (20) qui peut d'ailleurs être un simple socle où la connexion est assurée lorsque le dispositif de saisie est posé dessus. Lorsque la connexion est réalisée, les données entrées par le policier lors de la saisie des procès-verbaux de contravention sont transmises (38) automatiquement à un centre de collecte où elles sont stockées dans un fichier d'attente 22 pendant une certaine période de temps (3 ou 4 jours de préférence). L'accès à ce fichier d'attente est seulement autorisé à certaines personnes dûment habilitées telles que par exemple les commissaires de police. Ainsi, un commissaire de police peut décider de faire bénéficier un contrevenant d'une indulgence et faire retirer la contravention du fichier d'attente durant cette période de temps de stockage.

Une fois la période de stockage dans le fichier d'attente écoulée, les informations sont transmises (40) automatiquement à un centre de traitement 24. On doit noter qu'il peut exister une pluralité de centres de traitement.

Le possesseur du véhicule de retour à l'endroit du véhicule récupère alors la carte 14 en la déclipsant de l'essuie-glace et procède à sa consultation (42) au moyen d'un dispositif de consultation 18 qui peut se trouver dans un bureau de tabacs ou dans un centre des impôts. Un tel dispositif comporte un écran d'affichage sur lequel s'affiche l'ensemble des informations relatives à l'infraction dès que la carte de contravention 14 est insérée dans une fente prévue à cet effet. On doit noter que les dispositifs de consultation peuvent être également des bornes de consultation disposées dans des endroits stratégiques tels que les stations service, les grandes surfaces, les parkings, etc.

Un dispositif de consultation 18 peut également servir au paiement de la contravention par le contrevenant (ou toute autre personne) muni de la carte de contravention. Dans le cas où ce paiement peut être effectué (44) , la personne chargée d'encaisser le règlement au bureau de tabacs ou au centre des impôts enregistre (46) ce règlement dans le dispositif de consultation (et d'encaissement) 18 et un reçu est fourni à la personne effectuant le paiement. On doit noter que si le dispositif de consultation est une borne le paiement ne pourra se faire que par carte bancaire. Dans le cas où le dispositif de consultation n'est pas en même temps dispositif d'encaissement, le règlement peut se faire soit par l'achat d'un timbre amende qui est collé sur la carte de contravention avant de transmettre cette dernière (48), par la poste, au centre de collecte, soit par l'envoi de chèque de paiement accompagné de la carte de contravention ou tout autre moyen approprié.

Les encaissements effectués au moyen d'un dispositif de consultation (et d'encaissement) 18 sont transmis au centre de collecte de préférence la nuit lorsque le lieu de paiement est fermé. Dans ce dernier cas, chaque règlement qu'il soit effectué par un des dispositifs de consultation et d'encaissement ou par l'envoi de la carte de contravention munie de son timbre amende ou d'un chèque, donne lieu à l'effacement dans le fichier d'attente 22 si ledit règlement est effectué durant la période de stockage, ou est transmis au centre de traitement 24 concerné après cette période. On doit noter que le rôle du centre de traitement 24 est, outre de recevoir les règlements des contraventions, de procéder aux relances et majorations en cas de retard de paiement et de traiter les demandes d'informations et les contestations.

Pour éviter d'être retirée trop facilement du pare-brise du véhicule en infraction, la carte de contravention est munie d'un moyen de clipsage décrit ci-après.

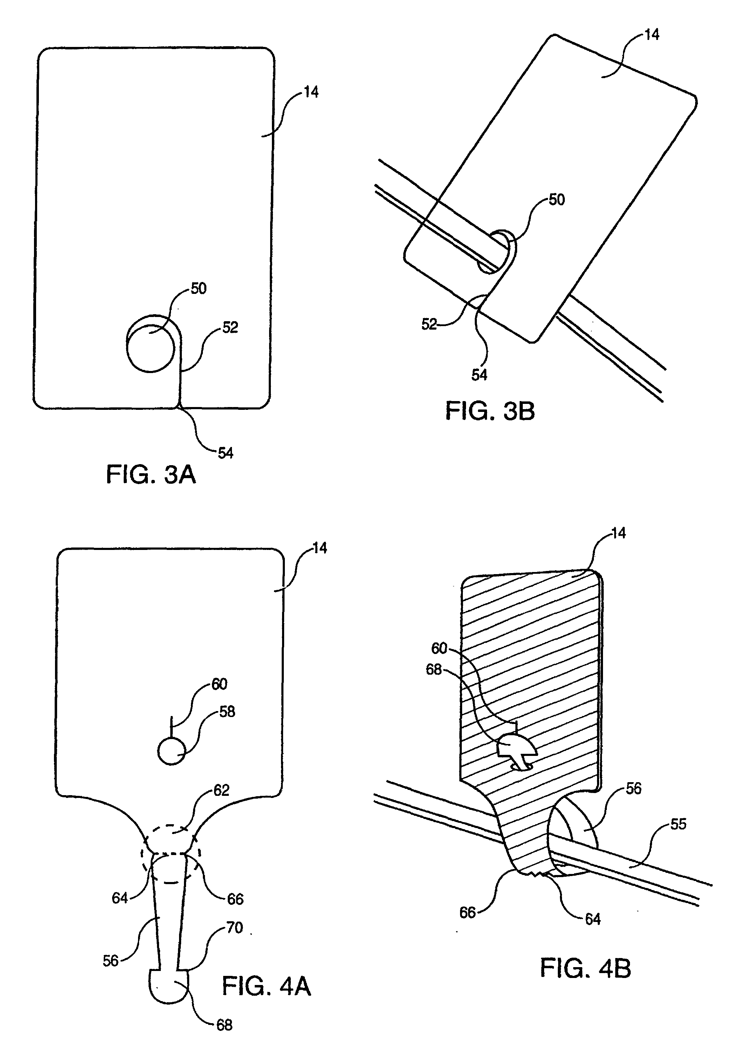

Selon un premier mode de réalisation non limitatif illustré sur les figures 3A et 3B, la carte de contravention 14 comporte un orifice 50 prolongé sur son côté d'une fente 52. Une découpe spéciale 54 est pratiquée à l'extrémité extérieure de cette fente sur le bord de la carte.

Le clipsage se fait en appuyant la carte contre le bras de l'essuie-glace 55 au niveau de la découpe spéciale 54 qui facilite la séparation au droit de la fente 52 et l'introduction aisée par pivotement de la carte du bras de l'essuie-glace jusque dans l'orifice 50. La nature du matériau constitutif de ces cartes permet d'utiliser ses possibilités de déformation pour laisser passer le bras 55 de l'essuie-glace. La rigidité du matériau concrétise un clipsage efficace sur le bras.

Selon un deuxième mode de réalisation illustré sur les figures 4A et 4B la carte 14 est prolongée d'une languette 56. Un orifice 58 et une fente 60 sont pratiqués dans cette carte. Une zone de faiblesse 62 est crée sur la languette par le biais de perforations 64, encadrées par deux découpes spéciales 66 de faiblesse directive permettant de diriger la force de traction exercée à l'arrachage vers les perforations 64, ce qui aura pour effet de séparer la partie languette 56 du reste de la carte en fournissant un certain effort. Une tête arrondie 68 de pénétration est pratiquée en bout de languette, précédée de deux méplats 70 de blocage. La dimension de la tête 68 est plus importante que le diamètre de l'orifice 58. La largeur de la languette avant les méplats 70 de blocage est légèrement inférieure au diamètre de l'orifice 58.

Comme illustré sur la figure 4B, la tête 68 arrondie est revenue sur le même plan que le reste de la carte. Les dimensions respectives de chaque partie constitutive de l'ensemble ont permis cette manoeuvre. La tête n'a pu entrer dans l'orifice 58 que grâce à l'existence de la fente 60. L'ensemble est verrouillé à la traction grâce aux deux méplats 70. De cette façon, la languette 56 ayant été passée au préalable autour du bras 55 de l'essuie-glace, l'ensemble y est fixé solidement. Pour désolidariser la carte de contravention du bras 55, il suffit de tirer sur la carte. Les deux découpes spéciales dirigent la force de traction vers les perforations 64 provoquant le déchirement et la séparation de la languette 56 du reste de la carte interdisant de ce fait toute réutilisation ultérieure.

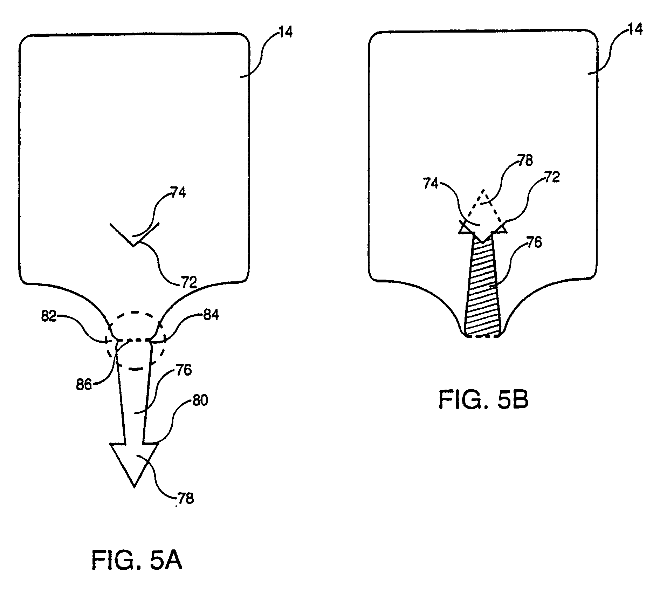

Selon un troisième mode de réalisation illustré sur les figures 5A et 5B, la carte 14 comporte une fente 72 en V pointe en bas, créant ainsi une partie volet 74 légèrement mobile grâce au matériau plastique de la carte. Une languette 76 prolonge cette carte. Elle se termine par une tête 78 de forme variable soit arrondie, soit en pointe, et munie de deux méplats de blocage 80. Comme dans le cas précédent une zone de faible résistance 82 est crée. La mise en oeuvre se fait en introduisant la tête 78 sous la partie volet 74 mobile grâce à la forme particulière de la fente 72 en V pointe en bas qui autorise cette manoeuvre. Le verrouillage se fait automatiquement en exerçant une traction sur la languette 76. La séparation de la languette d'avec le reste de la carte se fait au niveau de la zone de faible résistance 82 qui comporte les moyens empêchant la carte d'être réutilisée constitués par les découpes 84 et les perforations 86.

## Revendications

1. Système d'édition et de gestion de contraventions comprenant un dispositif de saisie portable (12) à la disposition de l'agent de police (10) chargé de dresser une contravention à un véhicule en infraction (16) pour y enregistrer les informations relatives audit véhicule, un support de contravention (14) destiné à être remis au possesseur dudit véhicule et adapté pour être inséré dans ledit dispositif de saisie de façon à y enregistrer les informations relatives audit véhicule saisies à partir dudit dispositif de saisie sous la commande de l'agent de police, et un dispositif de consultation (18) disposant d'un écran d'affichage et d'un moyen d'introduction du support de contravention dans ledit dispositif de consultation de façon à permettre au possesseur du véhicule de prendre connaissance des informations relatives à l'infraction affichées sur ledit écran d'affichage ;
ledit système étant **caractérisé en ce que** ledit support de contravention est constitué d'une carte à puce inaltérable et infalsifiable dans laquelle sont enregistrées les informations entrées par l'agent de police et de moyens de clipsage permettant à l'agent de police de clipser la carte sur le bras d'essuie-glace (55), de sorte que ladite carte ne soit pas détériorée par la pluie et ne puisse pas être aisément retirée après avoir été clipsée.

2. Système selon la revendication 1, dans lequel ledit dispositif de consultation (18) est en même temps un dispositif d'encaissement permettant au possesseur du véhicule d'effectuer le règlement de la contravention dont les informations relatives à l'infraction ont été enregistrées dans la carte de contravention (14).

3. Système selon la revendication 2, comprenant en outre un terminal d'acquisition de données (20) auquel se connecte ledit dispositif de saisie portable (12) de manière à transférer dans ledit terminal d'acquisition les informations relatives aux contraventions enregistrées préalablement dans ledit dispositif de saisie.

4. Système selon la revendication 3, comprenant en outre un centre de collecte connecté directement audit terminal d'acquisition de données (20) et disposant d'un fichier d'attente (22) destiné à enregistrer les informations transmises par ledit terminal d'acquisition de données pendant une période de temps prédéterminé avant de les traiter.

5. Système selon la revendication 4, dans lequel les règlements des contraventions effectués à l'aide dudit dispositif de consultation (18) sont transmises audit fichier d'attente(22) se trouvant audit centre de collecte.

6. Système selon la revendication 5, comprenant en outre un centre de traitement (24) connecté audit centre de collecte et destiné à traiter les contraventions dont les informations lui ont été transférées par ledit centre de collecte.

7. Système selon l'une des revendications 1 à 6, dans lequel les moyens de clipsage du support de contravention (14) sont constitués d'un orifice (50) prolongé d'une fente (52) terminée sur le bord de la carte par une découpe spéciale (54) permettant d'insérer le bras d'essuie-glace (55) dans la fente jusqu'à le faire pénétrer dans ledit orifice.

8. Système selon l'une des revendications 1 à 6, dans lequel lesdits moyens de clipsage du support de contravention (14) sont constitués d'une languette (56) terminée à son extrémité par une tête arrondie (68) et d'un orifice (58) et d'une fente (60) permettant l'introduction de ladite tête arrondie dans ledit orifice après que la languette a été placée autour du bras d'essuie-glace (55) ladite tête arrondie étant bloquée du fait que sa dimension est plus importante que le diamètre dudit orifice.

9. Système selon l'une des revendications 1 à 6, dans lequel lesdits moyens de clipsage du support de contravention (14) sont constitués d'une languette (76) terminée à son extrémité par une tête triangulaire (78) comportant deux méplats (80) et d'une fente (72) en V permettant l'introduction de ladite tête triangulaire dans ladite fente après que ladite languette a été placée autour du bras d'essuie-glace (55) et son blocage grâce audits méplats de la tête triangulaire.

10. Système selon la revendication 8 ou 9, dans lequel ladite languette (56 ou 76) comprend une zone de faiblesse (62 ou 82) comportant des perforations (64 ou 86) permettant de pouvoir séparer la carte de contravention (14) de la languette restant autour du bras d'essuie-glace (55) en exerçant un certain effort de traction.

## Claims

1. A system for issuing and managing offence tickets comprising a portable input device (12) provided to the police officer (10) in charge of ticketing a contravening vehicle (16) for recording therein data concerning said vehicle, a ticket medium (14) to be issued to the owner of said vehicle and adapted to be inserted in said input device for recording therein input data from said input device by the police officer, and a viewing device (18) provided with a display screen and means for inserting the ticket medium in said viewing device to enable the vehicle owner to access data concerning the offence displayed on said screen;
said system being **characterized in that** said ticket medium consists of a an unalterable tamper-resistant smart card in which the information entered by the police officer are recorded and clipping means enabling the police officer to clip the card on the wiper arm (55), such that said card is not damaged by rain and cannot be easily removed after it has been clipped.

2. A system according to claim 1 in which said viewing device (18) is at the same time a payment device enabling the vehicle owner to pay the fine, the information relative to which were recorded in the ticket card (14).

3. A system according to claim 2, further including a data acquisition terminal (20) to which said portable input device (12) is connected in order to transfer into said acquisition terminal the information relative to the offences previously recorded in said input device.

4. A system according to claim 3, further including a collection center connected directly to said data acquisition terminal (20) and having a follow-up file (22) designed to record the information transmitted by said data acquisition terminal during a predetermined time prior to processing.

5. A system according to claim 4, in which the payments of said offence tickets made with said viewing device (18) are transmitted to said follow-up file (22) located in said collection center.

6. A system according to claim 5, further including a processing unit (24) connected to said collection center and designed to process the offence tickets, the information of which was transferred to it by said collection center.

7. A system according to any one of claims 1 to 6 in which the clipping means of the ticket medium (14) consist of an opening (50) prolonged by a slot (52) terminated on the edge of the card by a special notch (54) enabling the wiper arm (55) to be inserted into the slot until it penetrates said opening.

8. A system according to any one of claims 1 to 6, in which said clipping means of the ticket medium (14) consist of a tab (56) with a rounded head (68) at its end and an opening (58) and a slot (60) enabling the introduction of said rounded head in said opening after the tab has been placed around the wiper arm (55), said rounded head being blocked as it is larger than the diameter of said opening.

9. A system according to any one of claims 1 to 6, in which said clipping means of the ticket medium (14) consist of a tab 76 having a triangular head (76) and two flat sections (80) at its tip and a V-shaped slot (72) enabling the insertion of said triangular head in said slot after said tab has been placed around the wiper arm (55), and its locking owing to said flat sections of the triangular head.

10. A system according to clam 8 or 9, in which said tab (56 or 76) includes a frangible zone (62 or 82) having perforations (64 or 86) enabling the ticket card (14) to be separated from the tab remaining around the wiper arm (55) by exerting a certain pulling force.

## Patentansprüche

1. System zum Erstellen und Verwalten von Verwarnungen, umfassend eine tragbare Eingabevorrichtung (12), die dem Polizeibeamten (10) zur Verfügung steht, der damit beauftragt ist, einem Fahrzeug (16) bei einer Verkehrswidrigkeit eine Verwarnung auszustellen, zur Aufzeichnung von das Fahrzeug betreffenden Informationen, einen Verwarnungsträger (14), der dazu bestimmt ist, dem Besitzer des Fahrzeugs übergeben zu werden, und dafür ausgelegt ist, in die Eingabevorrichtung eingeführt zu werden, so daß auf ihm die das Fahrzeug betreffenden Informationen aufgezeichnet werden, die über die Eingabevorrichtung von dem Polizeibeamten eingegeben wurden, und eine Abfragevorrichtung (18), die über einen Bildschirm und eine Einrichtung zur Einführung des Verwarnungsträgers in die Abfragevorrichtung verfügt, so daß der Besitzer des Fahrzeugs die die Verkehrswidrigkeit betreffenden Informationen, die auf dem Bildschirm angezeigt werden, zur Kenntnis nehmen kann, wobei dieses System **dadurch gekennzeichnet ist, daß** der Verwarnungsträger aus einer unveränderbaren und fälschungssicheren Chip-Karte, in der die von dem Polizeibeamten eingegebenen Informationen aufgezeichnet sind, und aus Verklinkungsmitteln besteht, mit denen der Polizeibeamte die Karte am Scheibenwischerarm (55) verklinken kann, so daß die Karte durch den Regen nicht beschädigt wird und nach der Verklinkung nicht leicht abgezogen werden kann.

2. System nach Anspruch 1, bei dem die Abfragevorrichtung (18) gleichzeitig eine Einzahlungsvorrichtung ist, die es dem Besitzer des Fahrzeugs gestattet, die Bezahlung des Verwarnungsgeldes vorzunehmen, deren die Verkehrswidrigkeit betreffenden Informationen in der Verwarnungskarte (14) aufgezeichnet wurden.

3. System nach Anspruch 2, umfassend außerdem einen Datenerfassungsterminal (20), an den die tragbare Eingabevorrichtung (12) angeschlossen wird, um die zuvor in der Eingabevorrichtung aufgezeichneten die Verkehrswidrigkeiten betreffenden Informationen in den Erfassungsterminal zu übertragen.

4. System nach Anspruch 3, umfassend außerdem eine Sammelzentrale, die direkt mit dem Datenerfassungsterminal (20) verbunden ist und über eine Folgedatei (22) verfügt, die dazu bestimmt ist, die Informationen, die von dem Datenerfassungsterminal während eines vorbestimmten Zeitraums übertragen wurden, aufzuzeichnen, bevor sie verarbeitet werden.

5. System nach Anspruch 4, bei dem die mit Hilfe der Abfragevorrichtung (18) durchgeführten Bezahlungen der Verwarnungen in die in der Sammelzentrale befindliche Folgedatei (22) übertragen werden.

6. System nach Anspruch 5, umfassend außerdem eine Verarbeitungszentrale (24), die mit der Sammelzentrale verbunden ist und dazu bestimmt ist, die Verwarnungen, deren Informationen von der Sammelzentrale zu ihr übertragen wurden, zu verarbeiten.

7. System nach einem der Ansprüche 1 bis 6, bei dem die Mittel zum Verklinken des Verwarnungsträgers (14) aus einer Öffnung (50) bestehen, die durch einen Schlitz (52) verlängert ist, der am Rand der Karte durch einen speziellen Einschnitt (54) beendet wird, der die Einführung des Scheibenwischerarms (55) in den Schlitz gestattet, bis er in die Öffnung eingeführt wird.

8. System nach einem der Ansprüche 1 bis 6, bei dem die Mittel zum Verklinken des Verwarnungsträgers (14) aus einer Zunge (56), an deren Ende ein abgerundeter Kopf (68) vorgesehen ist, und aus einer Öffnung (58) und einem Schlitz (60) bestehen, der die Einführung des abgerundeten Kopfs in die Öffnung gestattet, nachdem die Zunge um den Scheibenwischerarm (55) herumgelegt wurde, wobei der abgerundete Kopf dadurch blockiert wird, daß seine Abmessung größer als der Durchmesser der Öffnung ist.

9. System nach einem der Ansprüche 1 bis 6, bei dem die Mittel zum Verklinken des Verwarnungsträgers (14) aus einer Zunge (76), die an ihrem Ende einen dreieckigen Kopf (78) mit zwei Abflachungen (80) aufweist, und einem V-förmigen Schlitz (72) bestehen, der die Einführung des dreieckigen Kopfs in den Schlitz, nachdem die Zunge um den Scheibenwischerarm (55) herumgelegt wurde, und seine Blockierung durch die Abflachungen des dreieckigen Kopfs gestattet.

10. System nach Anspruch 8 oder 9, bei dem die Zunge (56 oder 76) eine Schwächungszone (62 oder 82) mit Perforationen (64 oder 86) umfaßt, die durch Ausübung einer gewissen Zugkraft die Abtrennung der Verwarnungskarte (.14) von der an dem Scheibenwischerarm (55) verbleibenden Zunge gestatten.
